**Europäisches Patentamt**

**European Patent Office**

**Office européen des brevets**

(19)

(11) Publication number:

**0 009 295**
A1

(12)

# EUROPEAN PATENT APPLICATION

(21) Application number: 79200538.1

(22) Date of filing: 25.09.79

(51) Int. Cl.³: **H 04 B  9/00,** H 04 B  1/38,
A 61 F  11/02

(30) Priority: 27.09.78 SE 7810158

(71) Applicant: **International Standard Electric Corporation,
320 Park Avenue, New York 22, N. Y. (US)**

(43) Date of publication of application: 02.04.80
**Bulletin 80/7**

(72) Inventor: **Skogsberg, Lennart, Domarvägen 15, 141 45
Huddinge (SE)**
Inventor: **Fetz, Walter, Solbovägen 22, 150 24
Rönninge (SE)**

(84) Designated Contracting States: **AT BE CH DE FR GB IT
NL**

(74) Representative: **Thul, Leo, Dipl.-Phys., Kurze Strasse 8
Postfach 300 929, D-7000 Stuttgart 30 (DE)**

(54) **Infrared light communication equipment.**

(57) A method of inducing cariostasis comprising administering orally a cariostatic amount of erythritol. The method is preferred wherein said erythritol is administered in the form of sugarless chewing gum or toothpaste. Erythritol for use in the prevention or reduction of dental caries and sugarless cariostatic compositions comprising at least 5 % erythritol are claimed. Preferred compositions are in the form of toothpaste or chewing gum.

EP 0 009 295 A1

ACTORUM AG

Patent Attorney
Dipl.-Phys. Leo Thul
Kurze Str.8, Postfach 300 929
D-7000 Stuttgart 30
Germany

**0009295**

L.Skogsberg-W.Fetz 5-2

- 1 -

## INFRARED LIGHT COMMUNICATION EQUIPMENT

The invention refers to an equipment to be carried on the human body, for receiving and transmitting audio frequency signals by way of carrier-frequency modulation of infrared light, comprising hearing means to be attached to the ear and a voice microphone.

Such an equipment is described in DE-OS 24 31 937. Fig.5 of this publication shows a two-way communication system in which the persons each carry on their bodies a transceiver to which the diodes for transmitting and receiving the infrared light are attached and a headset is connected via a cable. From Fig.7 of this publication it can be seen that in the case of a one-way communication from a stationary transmitter to a person, the latter carries a headset to the head band of which an opto-electronic receiving transducer is mounted.

From the German technical journal "Elektronik" (1976), No.11, page 16 there is known a headset for use in connection with a one-way communication system comprising a stationary transmitter, in which the opto-electronic receiving transducer is integrated in the receiver capsule of the headset.

It is the object of the invention to provide a more compact equipment of the aforementioned type in order thus to give the wearer more freedom of movement, and to design it in

L.Skogsberg 5-2          - 2 -

such a way that it, in accordance with a further embodiment, still permits a sufficient communication also in extremely noisy surroundings.

This object is achieved in that the infrared transmitting and receiving means form one structural unit with the hearing means, and that the voice microphone is firmly connected to said structural unit.

The use in noisy surroundings, such as in a factory, is possible in that said structural unit is realized with the aid of an ear protector, i.e. in such a way that said hearing means are disposed on the side facing the ear, and that said transmitting and receiving means are disposed on that side of the ear protector not facing the ear.

Relative thereto it is then of advantage with a view to enabling a reliable communication that a noise-sensing microphone is added on that side of said ear protector not facing the ear, and that the noise-sensing microphone is adapted to generate a well defined threshold for voice control in cooperation with said voice microphone.

It adds towards obtaining an improved quality of reception and avoiding the interference with others that the transmitting means are positioned in such manner that their maximum radiating effect is achieved in the direction which the person carrying the equipment is facing.

In order to avoid disturbing interferences among several transmitted signals, the invention proposes that a received signal controls an attenuator  as arranged in the signal path of said voice microphone, into its position in which speech is prevented from passing.

It is considered an advantage that a constant current generator keeps the transmitter power constant within the operating range of the battery.  Relative thereto, an economical energy consumption is achieved in that said transmitting means are controlled by pulses of short duration and preferably large current.

To avoid annoying interferences in the hearing means it is proposed that by means of the oscillator as provided for the carrier frequency, the demodulator of said receiving means is blocked during receiving intervals. For this purpose it is possible to switch over to a high frequency channel on which e.g. music is transmitted, without this at any time affecting the possibility of responding to infrared light signals. This is accomplished in that a switch is arranged in the path leading the carrier frequency signal to said demodulator with said switch, when in its activated position, disconnecting the carrier frequency signal from said demodulator and, instead, connecting to it a frequency-modulated high-frequency signal for general communications, in which case the means for receicing said high-frequency signal forms a structural unit together with said hearing/ transmitting/receiving means.

The invention will now be described by way of example in the following with reference to the accompanying drawing, in which

Figure 1     diagrammatically illustrates a person provided with a headset which is designed in accordance with the invention and

Figure 2     shows a block diagram of the communication equipment in accordance with the invention, with all the components of Figure 2 being adapted to be incorporated in the various portions of Figure 1.

The same reference numerals have been utilized in the two figures wherever possible.

0009295

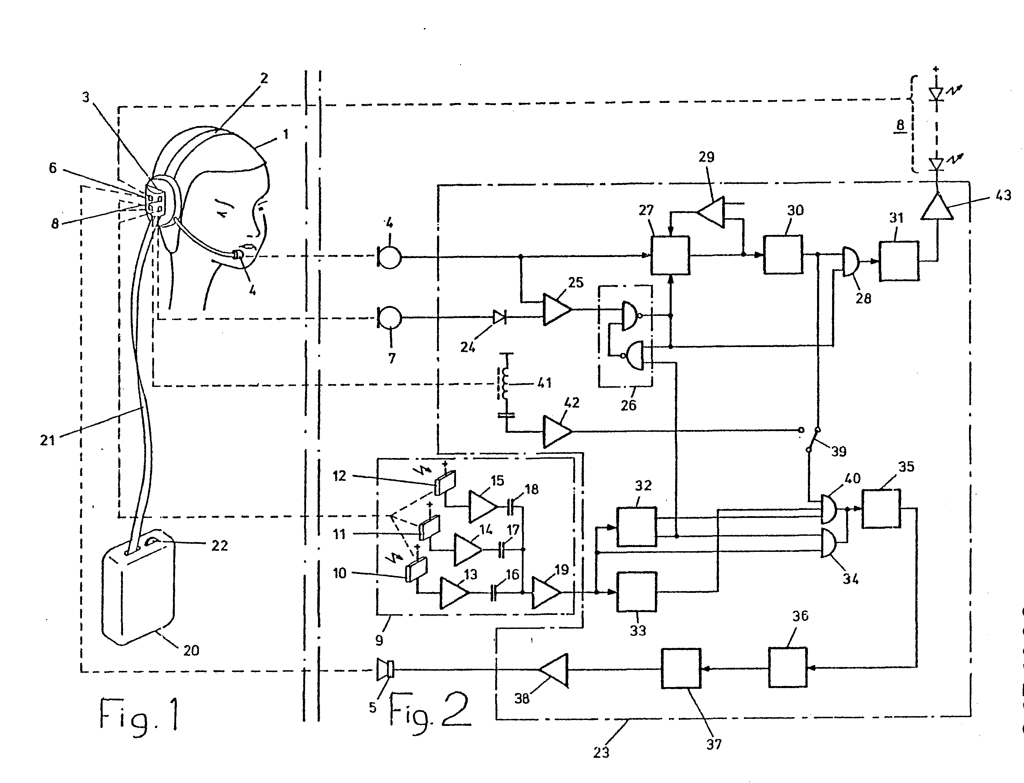

Figure 1 indicates a person 1 being provided with a headset 2 including two ear protectors, of which only one, namely 3, is visible, as well as a voice microphone 4 which is connected to said one ear protector 3. The ear protector 3 is a high-quality ear protector of standard type, said ear protector having been provided with a built-in loudspeaker which is diagrammatically represented by a small loudspeaker 5. In order to make it possible to utilize ear protectors of standard type these have been provided with a built-on cap 6 of a material which is penetrable by infrared radiation of short wavelength and which contains a microphone 7 for registering noise entering through small apertures (not shown) in the cap, furthermore infrared radiation transmitter diodes 8, and receiver diodes with associated components in accordance with block 9 of Figure 2, in which three diodes 10, 11 and 12 are shown, which can be positioned in different places on the ear protector so that when actuated by infrared radiation they provide reception of omnidirectional type. Each receiver diode is provided with an individual optical low-pass filter for eliminating the influence of light waves having shorter wavelengths than the infrared light. Each one of said diodes is connected first to an amplifier 13, 14 and 15, and thereafter to a coupling capacitor 16, 17 and 18, respectively, with the respective output sides of the coupling capacitors being interconnected and coupled to a common amplifier 19. Unmodulated light signals do not reach the amplifier 19 as the result of the coupling capacitors 16, 17 and 18, respectively, only passing modulated signals.

The two ear protectors in each headset are symmetrical, and their electrical circuits are connected by means of leads in the head band of the headset. A transmitter/receiver 20 is connected to one of the ear protectors over a connecting cable 21 and includes batteries, appropriately in the form of nickel-cadmium cells. The operating voltage of transmitter/receiver 20 is maintained constant, and this is done in a manner known per se by means of a voltage stabilizer (not shown). The transmitter/receiver may appropriately be provided with a combined on/off switch with a volume control 22.

The block 23 of Figure 2 shows the components included in the transmitter/receiver 20. The mode of operation of these components will be understood from the description of the mode of operation of the communication equipment which will now follow.

The general function of the transmitter is to amplify both voice and noise levels and to compare the sound pressure at the voice microphone 4 to the sound pressure at the reference noise microphone 7 so as to achieve a well defined threshold for voice control. The higher the noise, the greater sound pressure is necessary at the voice microphone for initiating voice transmission. Microphone 4 senses both voice and noise from the environment, but this microphone is noise-compensated and hence principally only submits a signal corresponding to the voice (speech). Microphone 7 only senses noise from the environment and is connected to a rectifier 24 for rectifying the noise signal. Sound signals from microphone 4 and from microphone 7 are more specifically compared in a comparator 25, whose resulting signal is supplied to a bistable flip-flop circuit 26 which cancels the attenuation in an attenuator 27, which when attenuated, prevents the speech over microphone 4 from passing, and also opens a gate 28. Attenuator 27 is included in a circuit for automatic volume control, and in addition to attenuator 27 this circuit includes a comparator 29. After the voice signal from microphone 4 has passed the circuit for automatic volume control it reaches a voltage-controlled oscillator 30 which oscillates at a constant frequency, concurrently delivering a carrier on which the speech is frequency modulated. The resulting signal is supplied through gate 28, which, as has been mentioned above, already has been opened, to a monostable flip-flop circuit 31, whose

L.Skogsberg 5-2

0009295

purpose is to convert the incoming frequency-modulated signal to the desired pulses of short duration of a pulse phase modulation. These pulses are forwarded to transmitter diodes 8 over an amplifier 43 which is provided with a constant-current generator. Thereby the transmitter power is maintained constant within the operating range of the battery, irrespective of the charge condition of the battery and in spite of the battery voltage decreasing from a maximum value (when the battery is newly charged) to a minimum value (when the charge of the battery has decreased to the permitted lower limit). In this manner the period during which the battery may be utilized will be extended. Transmitter diodes 8 radiate pulses directionally, and these diodes may appropriately be positioned in such manner on the caps 6 of the ear protectors 3 that the radiation operation will be strongest in the direction in which the face is turned and slightly weaker sidewards and rearwards. However, under all circumstances a radiation of omnidirectional type is achieved by the manner in which the transmitter diodes are disposed in the cap 6.

In order to prevent two or more equipments from transmitting simultaneously, which causes an unpleasant interference signal in the other receivers, the above-mentioned bistable flip-flop circuit 26 serves an additional purpose besides the one mentioned above. If a counterpart is already transmitting, the own transmitter cannot deliver a signal in consequence of the carrier-sensing monostable flip-flop circuit 32 providing a signal to flip-flop circuit 26 and preventing the latter from being switched to speech position.

In receiving infrared radiation signals, including signals from the own transmitter diodes for enabling listening, the signals are supplied to the receiver diodes 10, 11 and 12, respectively, whereafter the signals are forwarded through the respective amplifiers 13, 14 and 15 and the coupling capacitors 16, 17 and 18, respectively, to the amplifier 19. From the latter the signal is supplied to two monostable flip-flop circuits 32 and 33 having different time constants. Flip-flop 32 serves the purpose of indicating the presence of an incoming carrier, and the function of flip-flop 33 will be described below. The signal derived from flip-flop 32 opens a gate 34 which passes the signal derived from the block 9 to a monostable flip-flop circuit 35 aimed at regenerating and extending the incoming signal of short duration, and feeding out the regenerated signal to a demodulator 36 which demodulates the incoming signal and supplies its output signal to an attenuator 37 which ensures that the signal does not exceed a predetermined value as a safety measure so that the eardrums of the person carrying the headset will not be injured. The output signal from attenuator 37 is supplied to a terminating stage 38, and is forwarded from there to the above-mentioned loudspeaker 5 which is built into the ear protector 3.

The block 23 contains a switch 39 which in its position illustrated in the figure passes the carrier derived from the frequency-controlled oscillator 30 to a gate 40 which is open on the condition that no carrier is being received from block 9 over the monostable flip-flop circuit 32. If no ir-signals are being received the monostable 35 is continuously triggered from the VCO 30 via gate 40. The monostable q-output will therefore comprise nonmodulated symmetrical pulses and the demodulator output is mid-level zero. Receiving an ir-signal the monostable 35 output changes "softly" from symmetrical to non-symmetrical pulses due to the modulated input. The purpose is to prevent transients at the demodulator output from occurring and from being received in the loudspeaker 5, which would cause unpleasantness to the relevant person.

If the switch 39 is in its other position a frequency-modulated high frequency-signal is received from a loop 41 over an amplifier 42, and is forwarded to gate 40 which sends the signal on to the flip-flop 35 to convert the signal to pulses of short duration of a pulse phase modulation. Thereafter the signal is treated in the manner described above.

The loop has the purpose of making it possible to receive music or general messages and to forward these to the ear protectors. When communication over the infrared radiation medium is to be established it is desired to cut out the music, which is done by gate 40 being closed in consequence of the signal arriving from block 9. This in turn changes the infrared radiation message to be forwarded through gate 34 and the monostable flip-flop 35, etc., while the music cannot be heard.

The designation 33 refers to a monostable flip-flop circuit having a very long time constant and the purpose of disconnecting the music by closing the gate 40 so that only speech via the infrared radiating diodes will be audible.

0009295

L.Skogsberg 5-2

Claims:

1. Equipment to be carried on the human body, for receiving and transmitting audio frequency signals by way of carrier-frequency modulation of infrared light, comprising hearing means to be attached to the ear and a voice microphone, characterized in that the infrared transmitting (8) and receiving means (10-12) form one structural unit with the hearing means (5), and that the voice microphone (4) is firmly connected to said structural unit.

2. An equipment as claimed in claim 1, characterized in that said structural unit is realized with the aid of an ear protector (3), i.e. in such a way that said hearing means (5) are disposed on the side facing the ear, and that said transmitting (8) and receiving means (10-12) are disposed on that side of the ear protector not facing the ear.

3. An equipment as claimed in claim 2, characterized in that a noise-sensing microphone (7) is added on that side of said ear protector (3) not facing the ear.

4. An equipment as claimed in claim 3, characterized in that said noise-sensing microphone (7) is adapted to generate a well defined threshold for voice control in cooperation with said voice microphone (4).

5. An equipment as claimed in any one of claims 1 to 4, characterized in that said transmitting means (8) are positioned in such manner that their maximum radiating effect is achieved in the direction which the person carrying the equipment is facing.

6. An equipment as claimed in claim 1, characterized in that a received signal controls an attenuator (27) as arranged in the signal path of said voice microphone (4), into

L.Skogsberg 5-2

its position in which speech is prevented from passing.

7. An equipment as claimed in claim 1, characterized in that a constant current generator keeps the transmitter power constant within the operating range of the battery.

8. An equipment as claimed in claim 1, characterized in that said transmitting means (8) are controlled by pulses of short duration and preferably large current.

9. An equipment as claimed in claim 1, characterized in that by means of the oscillator (30) as provided for the carrier frequency, the demodulator (36) of said receiving means (9) is blocked during receiving intervals.

10. An equipment as claimed in claim 9, characterized in that a switch (39) is arranged in the path leading the carrier frequency signal to said demodulator (36), with said switch (39), when in its activated position, disconnecting the carrier frequency signal from said demodulator (36) and, instead, connecting to it a frequency-modulated high-frequency signal for general communications, in which case the means (41) for receiving said high-frequency signal forms a structural unit together with said hearing/transmitting/receiving means.

Fig.1

Fig.2

0009295

## DOCUMENTS CONSIDERED TO BE RELEVANT

| Category | Citation of document with indication, where appropriate, of relevant passages | Relevant to claim |
|---|---|---|
| P,X | <u>GB - A - 1 548 145</u> (STANDARD TELE-PHONES AND CABLES) (04-07-1979)<br><br>+ Totality +<br><br>-- | 1 |
| X | <u>DE - A1 - 2 609 283</u> (OSTERHOFER)<br><br>+ Page 2, lines 1 - 3 +<br><br>-- | 1 |
| | <u>DE - A1 - 2 656 431</u> (DEMOLUX)<br><br>+ Claims 8,9; page 13, lines 10, 11; page 14, lines 11 to 14; fig. 5,8,9 +<br><br>-- | 1,5 |
| D | <u>DE - A1 - 2 431 937</u> (SENNHEISER ELECTRONIC)<br><br>+ Totality +<br><br>-- | 1,5 |
| | FUNKSCHAU, 47. Jahrgang, Nr. 17/1975, München,<br><br>Heinz Peetz "Drahtloser Infrarot-Kopfhörer", pages 54 - 56,<br><br>"Fernsehton über Infrarot-Licht zum Kopfhörer oder zur HI-FI-Anlage", pages 56 - 58<br><br>+ Totality +<br><br>-- | 1,5,8 |
| | <u>DE - A1 - 2 701 963</u> (NIKISCH)<br><br>+ Fig. 3; page 6, lines 6 to 19 +<br><br>-- | 2 |
| | <u>DE - A1 - 2 522 381</u> (BATTELLE-INSTITUT)<br><br>+ Fig.1; page 7, lines 15 - 19; page 8, lines 1 - 10 +<br><br>-- | 3,4 |

CLASSIFICATION OF THE APPLICATION (Int. Cl.³)

H 04 B 9/00
H 04 B 1/38
A 61 F 11/02

TECHNICAL FIELDS SEARCHED (Int.Cl.³)

A 61 F 11/00
H 04 B 1/00
G 09 B 5/00
G 09 B 21/00
H 04 M 1/00
H 03 G 3/00
H 04 B 9/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| VIENNA | 19-12-1979 | DRÖSCHER |

EPO Form 1503.1  06.78

0009295

# European Patent Office

## EUROPEAN SEARCH REPORT

Application number

EP 79200538.1

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| X | <u>DE - A - 2 327 430</u> (MATSUSHITA ELECTRONICS) <br> + Page 2, lines 9 - 16 + <br> ---- | 8 | |
| | | | **TECHNICAL FIELDS SEARCHED (Int. Cl.²)** |

EPO Form 1503.2  06.78